# EUROPEAN PATENT SPECIFICATION

(11) **EP 3 758 118 B1**
(45) Date of publication and mention of the grant of the patent: **30.07.2025**
(21) Application number: 20192000.6
(22) Date of filing: 15.12.2015
(51) Int. Cl.: H01M 8/0258, H01M 8/0228

(54) **FUEL CELL SYSTEM**
BRENNSTOFFZELLENSYSTEM
SYSTÈME DE PILES À COMBUSTIBLE

(30) Priority: 17.12.2014 GB 201422458
(43) Date of publication of application: 30.12.2020
(62) Divisional of application: 15823735.4
(73) Proprietor: Intelligent Energy Limited, Loughborough LE11 3GB (GB)
(72) Inventor: DUFTON, Jesse Thomas Robin, Leicestershire, LE11 3GB (GB); CURNICK, Oliver James, Leicestershire, LE11 3GB (GB); JACKSON, Russell Oliver, Leicestershire, LE11 3GB (GB); ARMOUR, Simon Carl, Leicestershire, LE11 3GB (GB); NINAN, Daniel, Leicestershire, LE11 3GB (GB)
(74) Representative: Keltie LLP

(56) References cited:
- KR-B1- 101 395 419
- US-A1- 2006 099 481
- US-A1- 2008 248 368

## Description

The invention relates to a fuel cell system and in particular, although not exclusively, to a fuel cell system with improved fluid flow properties.

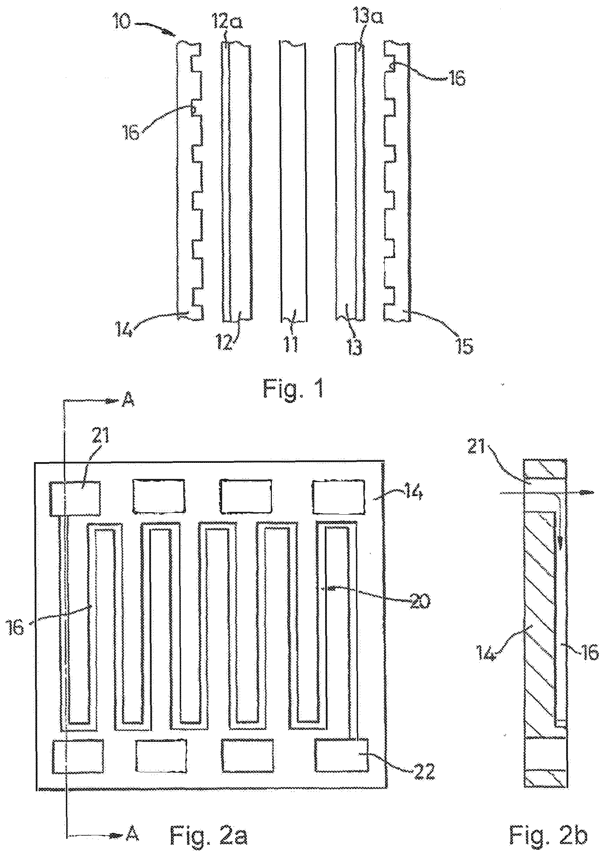

Conventional electrochemical fuel cells convert fuel and oxidant into electrical energy and a reaction product. One example layout of a conventional fuel cell 10 is shown in figure 1 which, for clarity, illustrates the various layers in exploded form. A solid polymer ion transfer membrane 11 is sandwiched between an anode 12 and a cathode 13. Typically, the anode 12 and the cathode 13 are both formed from an electrically conductive, porous material such as porous carbon, to which small particles of platinum and/or other precious metal catalyst are bonded. The anode 12 and cathode 13 are often bonded directly to the respective adjacent surfaces of the membrane 11. This combination is commonly referred to as the membrane-electrode assembly, or MEA.

Sandwiching the polymer membrane and porous electrode layers is an anode fluid flow field plate 14 and a cathode fluid flow field plate 15. Intermediate backing layers 12a and 13a may also be employed between the anode fluid flow field plate 14 and the anode 12 and similarly between the cathode fluid flow field plate 15 and the cathode 13. The backing layers 15a are of a porous nature and fabricated so as to ensure effective diffusion of gas to and from the anode and cathode surfaces as well as assisting in the management of water vapour and liquid water. For this reason, the backing layers 12a and 13a are sometimes also referred to as gas diffusion layers (GDLs).

The fluid flow field plates 14, 15 are formed from an electrically conductive, non-porous material by which electrical contact can be made to the respective anode electrode 12 or cathode electrode 13. At the same time, the fluid flow field plates facilitate the delivery and/or exhaust of fluid fuel, oxidant and/or reaction product to or from the porous electrodes 12, 13. This is conventionally effected by forming fluid flow passages in a surface of the fluid flow field plates, such as grooves or channels 16 in the surface presented to the porous electrodes 2, 13.

With reference also to figure 2a, one conventional configuration of fluid flow channel provides a serpentine structure 20 in a face of the anode 14 (or cathode 15) having an inlet manifold 21 and an outlet manifold 22 as shown in figure 2a. According to conventional design, it will be understood that the serpentine structure 20 comprises a channel 16 in the surface of the plate 14 (or 15), while the manifolds 21 and 22 each comprise an aperture through the plate so that fluid for delivery to, or exhaust from, the channel 20 can be communicated throughout the depth of a stack of plates in a direction orthogonal to the plate as particularly indicated by the arrow in the cross-section on A-A shown in the figure 2b.

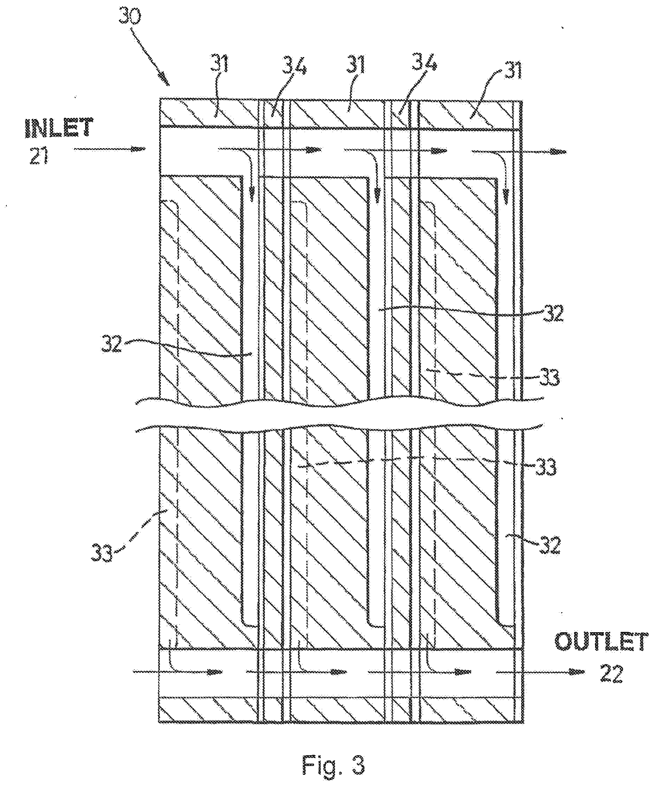

With reference to figure 3, in an example of a conventional fuel cell assembly 30, stacks of plates are built up. In this arrangement, adjacent anode and cathode fluid flow field plates are combined in conventional manner to form a single bipolar plate 31 having anode channels 32 on one face and cathode channels 33 on the opposite face, each adjacent to a respective membrane-electrode assembly (MEA) 34. The inlet manifold apertures 21 and outlet manifold apertures 22 are all overlaid to provide the inlet and outlet manifolds to the entire stack. The various elements of the stack are shown slightly separated for clarity, although it will be understood for the purposes of the present invention that they will be compressed together using sealing gaskets. Alternatively, the individual fuel cell assemblies 30 can be provided separately, for example in a row.

Water management is an important consideration in the operation of such fuel cells. During operation of a fuel cell, product water from the reaction between hydrogen and oxygen is formed at catalytic sites of the MEA. This water must be exhausted from the MEA via the cathode diffusion structure at the same time that oxygen is transported to the cathode face of the MEA. However, it is also important that the MEA remains suitably hydrated to ensure that the internal electrical resistance of the cell remains within tolerable limits. Failure to control the MEA humidification leads to hot spots and potential cell failure and/or poor electrical cell performance.

US2006/0099481 discloses a bipolar plate for use in a proton exchange membrane fuel cell having a surface with hydrophobic or hydrophilic coated regions.

KR101395419 discloses a method of manufacturing a separator plate for a fuel cell by applying a hydrophobic coating to a surface.

The present invention provides a fuel cell system as defined in the appended claims.

A fuel cell system may include at least a first surface region and a second surface region, wherein the first surface region is more hydrophilic than the second surface region, wherein the first and second surface regions are arranged in accordance with a parameter distribution of the fuel cell system in order to control fluid flow in the fuel cell system. The correlation between the arrangement of the first and second surface regions and the parameter distribution enables the hydrophobic properties of the fuel cell stack to be tailored to better meet the conditions encountered during use. As such, the performance of the system can be improved in terms of power output efficiency, cooling efficiency and the prevention of localised failure, for example.

The first surface region and the second surface region may be provided on a single component. One or more surfaces of the component may be configured to receive fluid flow. The first and second regions may be configured to control fluid flow across the one or more surface. The first surface region and the second surface region may be provided on a single surface of the single component.

The first surface region may be provided on a different component to the second surface region. In which case, a first component on which the first surface region is provided may be the same type of component, or a different type of component, to a second component on which the second surface region is provided. The first and/or second surface regions may be continuous regions. The first and/or second surface regions may be discontinuous regions.

The component may be one of: a gas diffusion layer, or a fuel cell plate or a fluid flow plate configured to guide reactant over an active area of a fuel cell of the fuel cell system. In examples where the component is a fluid flow plate, the first surface region may be a land region of the fluid flow plate and the second surface region may be a track region of the fluid flow plate. The fluid flow plate may comprise a folded portion. The second surface region may be provided on or in the folded portion. The fluid flow plate may comprise an active area. The active area may have an adjacent portion with respect to the folded portion. The active area may have a distal portion with respect to the folded portion. In examples where the component is a bipolar field flow plate having a cathode surface and an anode surface, the second surface region may be provided on the cathode surface and the first surface region may be provided on the anode surface. The first surface region may be provided on a current carrying region of the surface of the component. The first surface region may be provided on a region of the surface of the component that is not configured to carry substantial current when in use. Applying the hydrophobic coating only in regions that are not used to carry current means that the resistance of the cell is unaffected whilst still providing advantageous hydrophobic properties.

The component may be one of: a water separator; heat exchanger; pump or fluid line of the fuel cell system.

The parameter distribution may be one or more of: a distribution of current density, electric field or electric potential; a temperature distribution; a pH distribution; and a fluid flow distribution, such as a distribution of reactant flow across the surface.

The first surface region has a different texture, or surface pattern, to the second surface region.

The surface pattern of the second surface region may be configured to provide increased hydrophobicity. The first surface region is chemically inert. The first surface region may be without hydrophobic chemical agents.

The patterned surface may comprise nanoscale or microscale corrugations or ridges (continuous or discontinuous) for inhibiting microbial growth. The microscale corrugations may each have a width of between 1 and 100 microns, 10 and 100 microns and possibly between 2 and 25 microns. The microscale corrugations may be separated across their width by a spacing of between 1 and 100 microns, 10 and 100 microns and possibly between 2 and 25 microns. The microscale corrugations may each have a depth of between 1 and 100 microns, 10 and 100 microns and possibly between 2 and 20 microns. The patterned surface may comprise a cellular relief pattern. This is advantageous as the repeating cells of the patterned surface provide for efficient manufacture.

The patterned surface has an average roughness factor of between 2 and 30, the average roughness factor determined as the ratio of the actual surface area to the geometric surface area (in some examples the average roughness factor may be greater than 30).

The patterned surface is chemically inert. Advantageously, the surface may have hydrophobic properties due to the particular surface patterning, thus providing a hydrophobic surface without hydrophobic chemical agents. This may be desirable for maintaining a pure coolant supply to fuel cell stacks in the fuel cell system.

The first surface region may have a different chemistry to the second surface region.

The surface may comprise a third surface region providing a gradient of hydrophobicity between the first and second surface regions.

A method for fabricating a fuel cell system may comprise providing at least a first surface region and second surface region in accordance with a parameter distribution of the fuel cell system in order to control fluid flow, wherein the first surface region is more hydrophilic than the second surface region.

The method may comprise providing the first surface region at a peripheral region of a field flow plate. The method may comprise providing the second surface region at a peripheral region of a field flow plate. The method may comprise folding the peripheral region of the field flow plate to form a fluid distribution plenum. The folding step may be performed subsequent to the provision of the surface region on the field flow plate.

Also disclosed is a fluid flow plate with at least a first surface region and a second surface region, wherein the first surface region is more hydrophilic than the second surface region, and wherein one or both of the first and second surface regions are arranged in a folded portion of a fluid flow plate in order to control fluid flow.

Embodiments of the present invention are now described, by way of example only, with reference to the accompanying drawings, in which:
Figure 1 shows a schematic cross-sectional view through a part of a conventional fuel cell;
Figures 2a and 2b respectively show a simplified plan and sectional view of a fluid flow field plate of the fuel cell of figure 1;
Figure 3 shows a cross-sectional view through a conventional fuel cell stack with bipolar plates;
Figures 4a and 4b illustrate examples of surface arrangements within a fuel cell system;
Figures 5a and 5b show schematic views of an exemplary hydrophobic patterned surface;
Figure 6a shows a perspective view of part of a fluid flow field plate with channels formed in a first surface thereof;
Figure 6b shows a perspective view of part of the fluid flow field plate of figure 6a after a folding operation on the plate; and
Figure 7 shows a simplified plan view of a fluid flow field plate with various regions of hydrophobicity.

Embodiments of the present invention relate to the use of patterned surfaces to modulate the interaction between water and various fuel cell components, such as the wetting behaviour of the surface. A first surface region and a second surface region are provided in the fuel cell system. The first surface region is more hydrophilic than the second surface region. Expressed in another way, the second surface region is more hydrophobic than the first surface region because the property of hydrophobicity can be considered to be the absence of a hydrophilic attraction. In some examples, the second region may comprise a super-hydrophobic material.

The fuel cell system may comprise one or more fuel cell assemblies similar to those illustrated in figures 1 to 3, for example, and further optionally comprises additional components in anode or cathode circuits. The additional components can include a water separator, a heat exchanger, various pumps or fluid lines, as is known in the art. The first surface region and the second surface region may be provided on a single component and/or on a single surface. For example, on a single side of a component. Alternatively, the first surface region may be provided on a different component and/or different surface to the second surface region.

The first and second surface regions are arranged in accordance with a parameter distribution of the fuel cell system in order to control fluid flow within the system. The parameter distribution may be a 1- or 2-dimensional distribution of a particular fuel cell system parameter across the surface of the component or a 1-, 2- or 3-dimensional distribution of the parameter within the fuel cell system more generally. As such, the parameter distribution can be considered to provide a map of a particular property across the surface or in the system.

Examples of types of parameter distribution include:
a distribution of current density, electric field or electric potential;
a temperature distribution;
a pH distribution; and
a fluid flow distribution, such as a distribution of reactant flow across the surface.

The skilled person will appreciate that for some fuel cell components the above parameters are interrelated. For example, there may be a correlation between current density and temperature distributions for some components. The parameter distribution may be derived from a model/prediction or may be determined from experimental observations of the system, or a particular component in use.

The correlation between the arrangement of the first and second surface regions and the parameter distribution enables the hydrophobic properties of the fuel cell stack to be tailored to better meet the conditions encountered during use. As such, the performance of the system can be improved in terms of power output efficiency, cooling efficiency and the prevention of localised failure, for example.

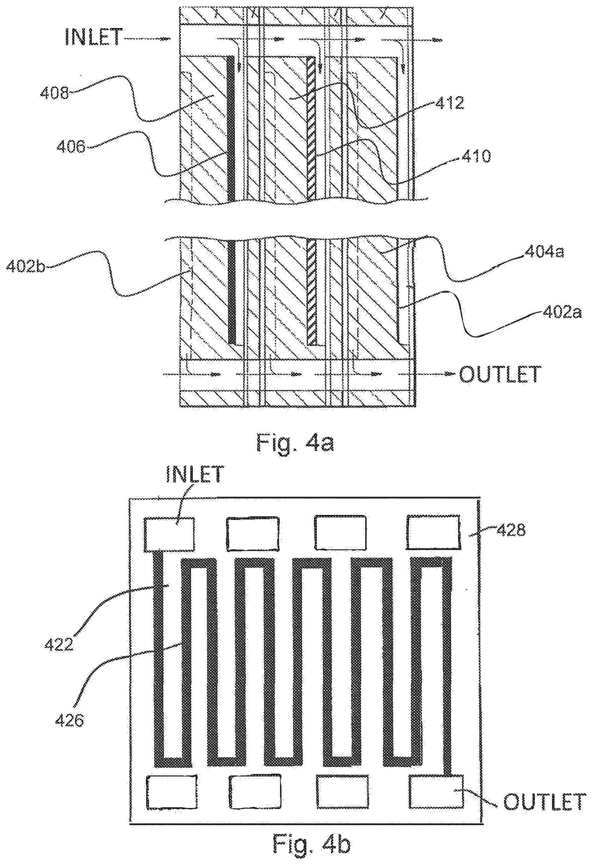

Figures 4a and 4b illustrate examples of surface arrangements within a fuel cell system where different hydrophilic/hydrophobic surfaces properties are used to modulate water/surface interactions.

Figure 4a illustrates an example in which the first surface region 402a is provided on a first component 404a and the second surface region 406 of a higher hydrophobicity is provided on a different, second component 408. In this example the two components 404a, 408 are of the same sort, and are both fuel cell plates. Alternatively, the two components 404a, 408 could both be gas diffusion layers (GDLs), for example.

A third surface region 410 with a level of hydrophobicity between that of the first surface region 402a and the second surface region 404a is provided on a third component 412 that is situated between the first and second components 404a, 408. In this way, a gradient of hydrophobicity is provided between the first and second surface regions 402a, 406.

Providing a hydrophobic coating on a bipolar plate or GDL can improve fuel cell performance by reducing flooding within the cell. The potential for flooding varies through the thickness of a fuel cell stack (and some non-stacked arrangements) because, depending upon the cell arrangement, there may be a higher reactant level nearer the inlet of the stack than the outlet. In this way, the arrangement of the regions 402a, 404, 406 is in accordance with a reactant flow distribution through the stack in order to control reactant flow through the stack. The reactant flow distribution may be expressed as a 1-dimensional distribution perpendicular to the plane of the fuel cell plates. Such an arrangement may also be related to a temperature or cell voltage/current distribution through the stack, for example.

Figure 4a also illustrates an example in which another first surface region 402b and the second surface region 406 are both provided on different, opposing surfaces of the same component 408. The application of a hydrophobic layer may only be necessary on one face of the component, such as the cathode face, in order to reduce cell flooding. As such, the arrangement of the regions 402a, 404, 406 is also in accordance with a reactant flow (or voltage) distribution through the stack, albeit of more complicated geometry which is dependent on the arrangement of the plates and fluid flow channels.

Figure 4b illustrates an example in which the first surface region 422 and second surface region 426 are both provided on a single surface of a single component 428. In this example, the component 428 is also a fluid flow plate. The surface of the component 428 is configured to receive fluid flow and the first and second regions are configured to control fluid flow across the surface.

The first surface region 422 is provided in a "land" region of a fluid flow plate. The second surface region 426 is provided in a "track" region of the fluid flow plate. The track is configured to guide reactant over an active area of a fuel cell between an inlet and an outlet. Applying the hydrophobic coating only in regions of a component that are prone to flooding may also reduce the cost of the component, as well as potentially improving fluid flow performance.

In some examples, the land region on which the first surface region 422 is provided can be configured to conduct current generated by a MEA. The second surface region 426 provided in the track region is not configured to carry substantial current when in use. In this example the first and second surface regions are arranged in accordance with a 2-dimensional distribution of current density on the surface of the plate in order to control the flow of reactant across the surface of the plate. Applying the hydrophobic coating only in regions that are not used to carry current means that the resistance of the cell can be unaffected whilst still providing advantageous hydrophobic properties.

As an alternative to the example shown in figure 4b, a third surface region may be provided between the second surface region at the inlet and a first surface region at the outlet. In this way, a gradient of hydrophobicity may be provided between the first and second surface regions along the track. The gradient may be such that the hydrophobicity of the component is in accordance with a 2-dimensional reactant flow distribution through the track, similar to the reactant flow distribution discussed in relation to figure 4a.

Other examples of component that may comprise one or more of the first and second surface regions include fuel cell system components such as a water separator, heat exchanger, condenser, pump or fluid line of the fuel cell system.

In one example, the first and second surface regions can be arranged to prevent or manage ice formation. A hydrophilic, first surface region may be used to attract water to promote ice formation on the first surface region. A hydrophobic, second region may be used to prevent the formation of ice in an area or on a material that it is advantageous to remain unfrozen. In these cases the arrangement of the first and second surface regions may be in accordance with a temperature or chemistry distribution of the fuel cell system, for example. These principles may be applied anywhere within air, water, thermal or hydrogen modules of a fuel cell system.

In examples where the first and second surface regions are provided inside a heat exchanger (condenser), an area in which it is advantageous to maximise heat transfer and the rate of condensation may be provided as a hydrophobic, second surface region. An area from which water is required to drain away may be provided as a hydrophilic, first surface region. Such an arrangement may prevent a liquid film building up and limiting condensation in the condenser. In this example, the arrangement of the first and second surface regions may be in accordance with a fluid flow, temperature, pressure or heat transfer distribution of the condenser. The desired arrangement of the first and second regions may vary within the condenser and depending on the intended operating range of the condenser because, for example, the rate of change of condensation of humidified gas is different at 90-95 °C than at 70-75 °C.

In examples where the first and second surface regions are provided in a water separator, a hydrophobic, second surface region may be provided to aid water separation and a hydrophilic, first surface region may be provided to aid water extraction. In this example, the arrangement of the first and second surface regions may be in accordance with a liquid flow, pressure or temperature distribution of the water separator.

Surface patterning and/or variations in surface chemistry can be used to provide the first surface region, the second surface region and any optional third surface region that provides a gradient in hydrophobicity between the first surface region and the second surface region.

Examples of chemicals that may be used to provide a first surface region include hydrophilic carboxylate, pyrodine derivatives and polyvinyl acetate molecules, for example. In some examples, the first surface region may be chemically inert.

Examples of chemicals that may be used to provide a second surface region include hydrophobic alkyl chains, silanes, siloxanes and fluorocarbons molecules, for example.

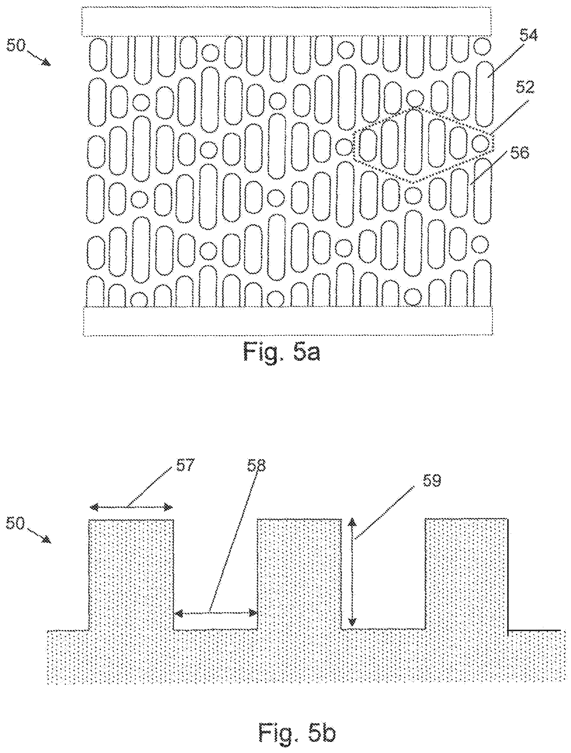

Figures 5a and 5b show schematic views of an exemplary hydrophobic patterned surface suitable for use in a second surface region. The first surface region may be provided by a surface that is smooth, relative to the second surface region, for example.

In figure 5a, a top-down view of an exemplary surface 50 is shown. In figure 5b, a cross-sectional view through three ridges 54 of the exemplary surface of figure 5a is shown. The surface 50 may be considered to comprise a plurality of nanoscale or microscale corrugations 54 raised up from a base level 56 of the surface in a cellular repeating pattern. The corrugations may be non-continuous, such as a series of discontinuous ridges, bumps or projections. The surface therefore may have a corrugated appearance with rows/regions of discontinuous corrugations.

Figure 5a shows a patterned hydrophobic surface comprising a cellular repeating pattern with a hexagonal/diamond shaped unit cell 52. Each unit cell 52 comprises six parallel ridges 54 of varying lengths which are raised in relation to the space between the ridges 56. This pattern may be considered to mimic the structure of a shark's skin, with each unit cell 52 representing a sharkskin scale, and each unit cell 52 comprising ridges 54 similar to those of a sharkskin scale.

While the surface shown in figure 5a shows a cellular repeating pattern of discontinuous corrugated ridges 54, other surface patterns may be used which satisfy the criteria for increasing hydrophobicity. For example, a surface may comprise structures which, from a top-down view of the surface, are substantially round, oval, triangular, square, rectangular, pentagonal, and/or hexagonal. As another example, a hydrophobic patterned surface may comprise structures within bands running across the surface. The structures may be raised up from the base level of the surface, and/or may be sunken / depressed into the base level of the surface. The patterned hydrophobic surface may comprise one or more different shapes, structure heights, structure separations, and/or structure widths.

Figure 5b illustrates different dimensions which may be defined for such a patterned hydrophobic surface. In this example, the ridges 54 and the spacing between ridges 56 have nanoscale or microscale dimensions. For example, the ridges 54 may each have a width 57 between 2 and 25 microns. Microscale ridges may be separated across their width by a spacing 58 of between 2 and 25 microns. The microscale ridges 54 may each have a depth 59 of between 2 and 20 microns. In some examples the width 57 may be more than 25 microns, the spacing 58 may be more than 25 microns, and/or the depth 59 may be more than 20 microns. In some examples the width 57 may be less than 2 microns, the spacing 58 may be less than 2 microns, and/or the depth 59 may be less than 2 microns. The dimensions 57, 58, 59 may be tuned depending on the level of hydrophobicity required. The dimensions 57, 58, 59 may be varied as a function of distance across a third surface region in order to provide a gradient in hydrophobicity.

The hydrophobic patterned surface has an average roughness factor of between 2 and 30, determined as the ratio of the actual surface area to the geometric surface area. For example, a perfectly smooth 1 cm² area has both an actual and geometric surface area of 1cm² and thus a roughness factor of 1. As the surface becomes rougher, due to corrugations and surface patterning for example, then the roughness factor increases. For example if the 1cm² surface is patterned such that the total exposed surface has an area of 2cm², then the roughness factor would be 2.

The surface roughness maybe quantified using other metrics. For example, the arithmetic mean roughness factor Rₐ may be determined for a surface and may lie in a particular range conducive for inhibiting microbial growth. The arithmetic mean roughness factor Rₐ is the arithmetic mean of absolute departures of a cross-sectional roughness profile from a mean line. Thus, if a cross section is taken through the patterned surface, the arithmetic mean of the differences from a mean line of this cross section would give the arithmetic mean roughness factor Rₐ. Of course, other ways of measuring roughness may be used and the roughness of the patterned hydrophobic surface determined using one or more of these methods may lie in a particular range conducive to a particular level of hydrophobicity.

While figure 5b shows the ridge height 59, width 57 and separation 58 to be the same across the surface 50, in other examples one or more of these dimensions may vary across the surface 50. In an example where structures are depressed into the surface rather than raised up from the base level of the surface, the height of the structure may be considered to be the distance from the base level of the surface to the bottom of the depression/trough formed by the structure.

The hydrophobic patterned surface may be a Tactivex^{®} surface with Sharklet^{®} technology. Other surfaces could be used.

In some examples, the hydrophobic patterned surface is chemically inert. Use of such a non-chemical system may be advantageous as the surface may not need to be "refreshed" as a chemically active component may need to be when its chemical activity has been depleted over time. The patterned surface may be able to provide hydrophobic properties for a longer time than a chemically active hydrophobic component.

In other examples, the hydrophobic patterned surface may be chemically active. This may be advantageous to provide hydrophobic regions through both chemically activity and non-chemical surface properties (that is, due to the physical structure of the surface relief).

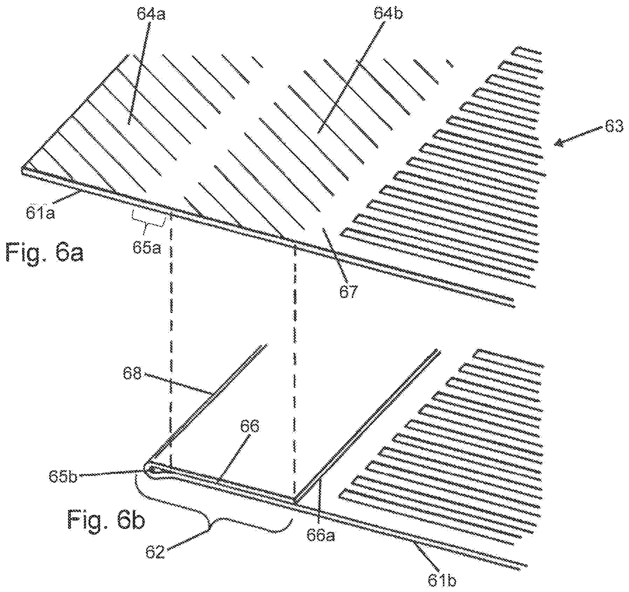

Figure 6a illustrates a fluid flow field plate 61a, having a plurality of channels 63 provided on a first surface 67 thereof. A first fold surface 64a and a second fold surface 64b are provided on the first surface 67 at a peripheral edge of the fluid flow field plate 61 a. A fold region 65a is provided on the first surface 67 between the first and second fold surfaces 64a, 64b. One or more of the first fold surface 64a, second fold surface 64b and fold region 65a may comprise a hydrophobic surface region. The hydrophobic surface region may be provided as a chemically active or hydrophobic patterned surface as described previously with regard to figure 5.

The fluid flow plate 61a of figure 6a, when subjected to a folding operation along the fold region 65a, transforms into a folded fluid flow field plate 61b in which a folded portion 62 is now formed in the plate 61 b as shown in figure 6b. At least part of the folded portion 62 provides a region of increased hydrophobicity with respect to the channels 63 of the fluid flow plate 61 b. By applying the hydrophobic surface region before the plate is folded, the difficulty of providing an even layer, or a layer with a particular geometric arrangement, within the enclosed folded region can be reduced.

The folded portion 62 comprises a plenum 65b having a longitudinal axis extending parallel to an edge 68 of the plate 61b and an interface region 66 formed by the fold surfaces 64a, 64b being adjacent and facing each other in close proximity. The provision of a hydrophobic surface region within the plenum 65b may reduce the resistance to fluid injection into the fuel cell plate. The interface region 66 forms a fluid connection extending from the plenum towards channels 63 on the first surface 67. The resistance to fluid flow from the plenum 65b to the channels 63 may be reduced by providing the interface region 66 of the folded portion 62 with a hydrophobic surface. Fuel or oxidant fluids may be provided to the channels 63 via ports along an edge of the fluid flow plate 61a opposite the folded region.

Preferably, the interface region 66 extends towards the channels 63, such that fluid passing along the interface region 66 exits at an outlet edge 66a and enters the channels 63 provided proximate thereto. The outlet edge 66a may optionally be provided such that the fluid exits the interface region directly into the channels, for example by the first fold surface 64a partially overlying the channels 63 or a selected number thereof by suitable shaping of the outer edge 66a. The outlet edge 66a may have first and second surface regions having different levels of hydrophobicity that are arranged in order to promote water concentration points corresponding to the channels 63.

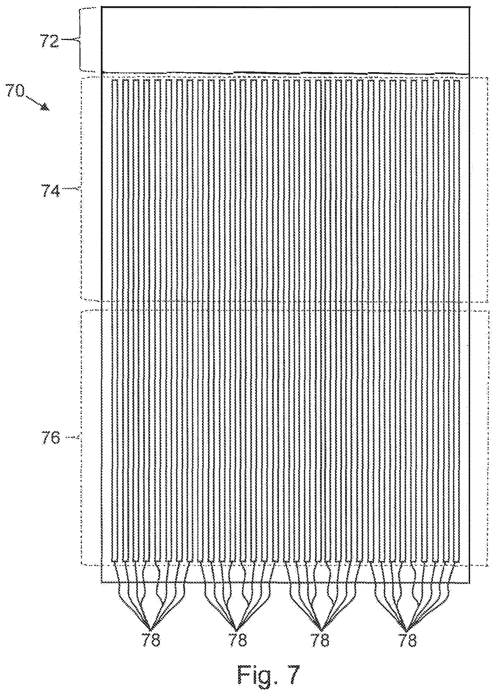

Figure 7 shows a simplified plan view of a fluid flow field plate 70. The fluid flow plate 70 has a folded portion 72 forming a fluid distribution plenum and an active area 74, 76 comprising a plurality of fluid flow channels 78. Fluid communication between the plurality of fluid flow channels 78 and the fluid distribution plenum may be achieved using the arrangement described previously with reference to figure 6. The active area has an adjacent portion 74 with respect to the folded portion 72 and a distal portion 76 with respect to the folded portion 72.

In one example, the active area 74, 76 has a first surface region that is more hydrophilic than a second surface region provided by at least part of the folded portion 72, as discussed previously with regard to figures 6a and 6b.

In an alternative example, at least part of the folded portion 72 provides a first surface region that is more hydrophilic than a second surface region formed in the active area 74, 76. Such an example may be advantageous in order to better control fluid dynamics within the fuel cell stack. The second surface region may be provided by only the adjacent portion 74 of the active area, by only the distal portion 76 of the active area or by both the adjacent and distal portions of the active area 74, 76. The second surface region may be provided by a hydrophobic coating, for example. In the case where a hydrophobic coating is applied to less than all of the active area, a mask may be used in order to guide the application of the coating to the required portion of the active area.

A cathode side and an anode side of the fluid flow plate 70 may have the same or different arrangements of hydrophobic surface regions. For example, substantially all of the anode side of the fluid flow plate 70 may be covered with a second surface region and only a part of the cathode side of the fluid flow plate 70 may be covered with the second surface region. A remainder of the cathode side of the fluid flow plate 70 may provide a first surface region.

In this example, the first and second surface regions can be arranged in accordance with the geometry of the fuel cell. For an evaporatively cooled fuel cell system, a temperature difference of 47°C to 72°C may, depending upon operating conditions such as backpressure, be present between the active area and non-active areas, such as the fuel distribution plenum. For a passively cooled planar fuel cell system, the temperature difference between active and non-active areas may be approximately 9°C. In evaporatively cooled and passively cooled systems, the geometry of the fuel cell is therefore related to the operating temperature distribution within the system. For a liquid cooled fuel cell system, the temperature difference between active and non-active areas may be substantially lower, and may be approximately 5°C in some applications. Arranging a hydrophobic surface region as a function of temperature may therefore be better suited to evaporatively cooled fuel cell systems or passively cooled planar fuel cell systems because the temperature gradient in some liquid cooled fuel cell system applications is relatively low.

The disclosure also relates to a method for fabricating a fuel cell system having at least a first surface region that is more hydrophilic than a second surface region. The method comprises providing the first surface region and the second surface region in accordance with a parameter distribution of the fuel cell system in order to control fluid flow in the system. The method may also comprise providing one or both of the first and second surface regions at a peripheral region of a field flow plate and folding the peripheral region of the field flow plate to form a fluid distribution plenum. In this way, a fuel cell system such as those described with reference to the examples above may be obtained.

## Claims

1. A fuel cell system with at least a first surface region (422) and a second surface region (426) on a single surface of a fluid flow plate (428), wherein
the first surface region (422) is more hydrophilic than the second surface region (426), wherein the second surface region (426) is more hydrophobic than the first surface region (422), the second surface region (426) being chemically inert and having an average surface roughness factor of between 2 and 30 due to a pattern of microscale ridges (25) on the second surface region (426), the roughness factor being determined as the ratio of the actual surface area to the geometric surface area.

2. The fuel cell system of claim 1, wherein the first surface region (422) has a different patterned surface to the second surface region (426).

3. The fuel cell system of claim 1 or claim 2, wherein the first surface region (422) is provided on a current carrying region of the surface of the fluid flow plate (428).

4. The fuel cell system of any preceding claim comprising a third surface region providing a gradient of hydrophobicity between the first and second surface regions (422, 426).

## Patentansprüche

1. Brennstoffzellensystem mit mindestens einem ersten Oberflächenbereich (422) und einem zweiten Oberflächenbereich (426) auf einer einzelnen Oberfläche einer Flüssigkeitsdurchflussplatte (428), wobei
der erste Oberflächenbereich (422) hydrophiler als der zweite Oberflächenbereich (426) ist, wobei der zweite Oberflächenbereich (426) hydrophober als der erste Oberflächenbereich (422) ist, der zweite Oberflächenbereich (426) chemisch inert ist und, aufgrund eines Musters aus Mikrorippen (25) auf dem zweiten Oberflächenbereich (426), einen durchschnittlichen Oberflächenrauheitsfaktor von zwischen 2 und 30 aufweist, wobei der Rauheitsfaktor als das Verhältnis der tatsächlichen Oberfläche zur geometrischen Oberfläche bestimmt wird.

2. Brennstoffzellensystem nach Anspruch 1, wobei der erste Oberflächenbereich (422) eine andere Musteroberfläche als der zweite Oberflächenbereich (426) aufweist.

3. Brennstoffzellensystem nach Anspruch 1 oder Anspruch 2, wobei der erste Oberflächenbereich (422) auf einem stromführenden Bereich der Oberfläche der Flüssigkeitsdurchflussplatte (428) bereitgestellt ist.

4. Brennstoffzellensystem nach irgendeinem vorhergehenden Anspruch, das einen dritten Oberflächenbereich umfasst, der einen Gradienten der Hydrophobizität zwischen den ersten und zweiten Oberflächenbereichen (422, 426) bereitstellt.

## Revendications

1. Système de pile à combustible comprenant au moins une première région de surface (422) et une deuxième région de surface (426) sur une seule surface d'une plaque d'écoulement de fluide (428), dans lequel
la première région de surface (422) est plus hydrophile que la deuxième région de surface (426), dans lequel la deuxième région de surface (426) est plus hydrophobe que la première région de surface (422), la deuxième région de surface (426) étant chimiquement inerte et ayant un facteur de rugosité de surface moyen compris entre 2 et 30 en raison d'un motif de crêtes à micro-échelles (25) sur la deuxième région de surface (426), le facteur de rugosité étant déterminé comme le rapport entre la surface réelle et la surface géométrique.

2. Système de pile à combustible selon la revendication 1, dans lequel la première région de surface (422) présente une surface à motif différent de la deuxième région de surface (426).

3. Système de pile à combustible selon la revendication 1 ou 2, dans lequel la première région de surface (422) est située sur une région de transport de courant de la surface de la plaque d'écoulement de fluide (428).

4. Système de pile à combustible selon l'une quelconque des revendications précédentes, comprenant une troisième région de surface fournissant un gradient d'hydrophobicité entre les première et deuxième régions de surface (422, 426).
